# EUROPEAN PATENT SPECIFICATION

(11) **EP 0 498 635 B1**
(45) Date of publication and mention of the grant of the patent: **12.04.1995**
(21) Application number: 92300966.6
(22) Date of filing: 05.02.1992
(51) Int. Cl.: C03B 9/453

(54) **Pusher system for glass forming machine**
Abstreifersystem für Glasformmaschinen
Système de poussoir pour des machines façonnant du verre

(30) Priority: 06.02.1991 US 651319
(43) Date of publication of application: 12.08.1992
(73) Proprietor: Emhart Glass Machinery Investments Inc., Wilmington, Delaware 19801 (US)
(72) Inventor: Mungovan, John P., Hartford, Connecticut 06070 (US); Abbott, Vaughan, Hartford, Connecticut 06027 (US); Voisine, Gary R., Hartford, Connecticut 06074 (US); Liska, Timothy J., Hartford, Connecticut 06092 (US)
(74) Representative: Randall, John Walter

(56) References cited:
- EP-A- 0 416 779
- US-A- 4 162 911
- US-A- 4 351 663
- US-A- 4 409 013
- US-A- 5 037 466

## Description

The present invention relates to pushout systems for I.S. glass container forming machines.

Each section of an I.S. machine deposits finished bottles on a dead plate and a pushout mechanism displaces the bottles from the dead plate through an angle of about from 90° to 120° onto a moving conveyor. Such pushouts have a set program of displacement with the pusher fingers of the mechanism first being axially advanced to the dead plate to receive the formed bottles and following a short period of time during which the bottles settle down, then rotated through a circular arc to deposit the bottles on the conveyor. The pusher fingers are then axially retracted leaving the bottles on the conveyor and rotated back to their initial position, see e.g. US-A-4 409 013.

As I.S. machines increase in speed conveyor capacity must be increased and this is normally achieved by speeding up the conveyor. This is undesirable since bottle control lessens as conveyor speed increases.

It is an object of the present invention to provide a pusher system which allows an increase of the capacity of the conveyor without suffering a loss in bottle control.

The present invention provides a pusher system including a plurality of pusher mechanisms, each displacing at least one bottle from an at rest position on a corresponding plurality of dead plates on an I.S. machine through a prederermined angle onto a moving conveyor belt, each of said pusher mechanisms comprising
pusher fingers, providing at least one ware receiving receptacle,
means, for axially advancing said pusher fingers from a retracted position to an advanced position to receive at least one bottle on an associated dead plate,
means for displacing the pusher fingers of the pusher mechanism from said advanced position to a deposit location along a bottle line on the conveyor, characterized in that
the means for axially advancing the pusher fingers of at least one of the pusher mechansisms may be caused to advance the pusher fingers from its advanced position to a further advanced position as the displacing means displaces the pusher fingers to the deposit location
so that one of the pusher mechanisms may be caused to move its pusher fingers from the advanced position to a first deposit location along a first bottle line on the conveyor,
while another of the pusher mechanisms may be caused to move its pusher fingers from the advanced position to a second deposit location along a second bottle line on the conveyor parallel to and spaced from the first bottle line
so that bottles will be deposited on the conveyor along such first and second bottle lines.

There now follows a description of a pusher system embodying the invention to be read with reference to the accompanying drawings.

In the drawings:

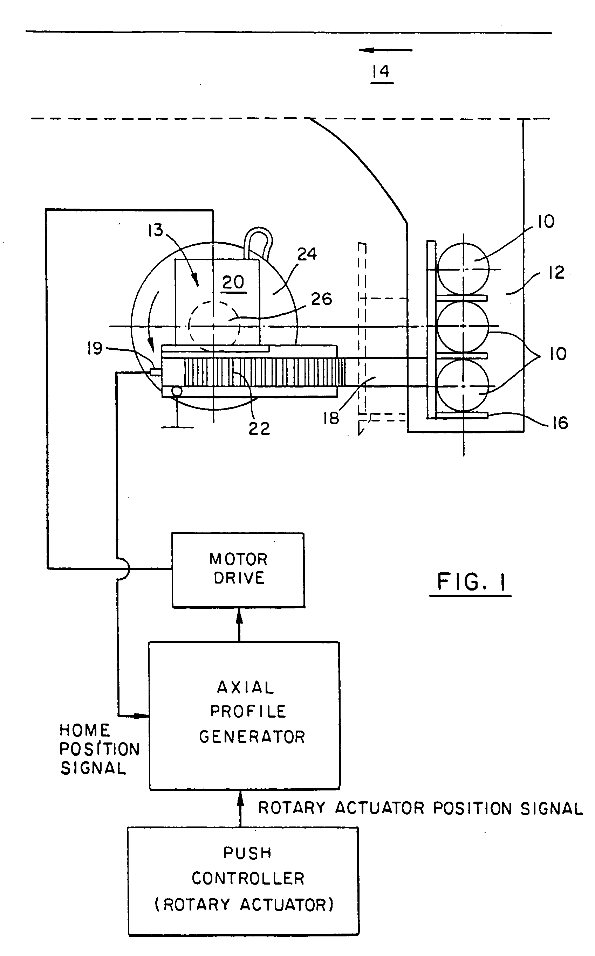

Figure 1 is a top view of a pusher mechanism;
Figure 2 is a schematic comparison of the pushout path of a conventional pusher mechanism and possible pushout paths of a pusher mechanism made in accordance with the teachings of the present invention;
Figure 3 is a schematic presentation showing how the pusher mechanism of Figure 1 can deposit bottles along multiple lines on the conveyor; and
Figure 4 schematically shows how a series of pusher mechanisms can feed two lines of bottles on the conveyor.

An I.S. machine comprises a pusher system comprising a plurality of pusher mechanisms, one associated with each section of the machine.

Formed glass bottles 10 which were deposited on a dead plate 12 of one individual section of an I.S. machine will be pushed by a pusher mechanism 13 from an at rest position on the dead plate 12 through a predetermined angle onto a moving conveyor 14. The pusher mechanism 13 is made up of pusher fingers 16 secured to a rack 18 and providing three ware receiving receptacles, a first programmable stepping motor 20 (which could be a servo motor), a drive gear 22 connected to the motor shaft and drivingly engaging the rack to axially advance the rack 18 and hence the pusher fingers, and a support plate 24 which is pivotably displaceable about a vertical axis by a second programmable stepping motor 26.

At the beginning of a cycle, the rack 18 is fully retracted and this position is verified by a Home Position Signal issued by a start position sensor 19. The Pushout Controller then instructs the Axial Profile Generator to define a first rack advance velocity profile to drive the Motor Drive to advance the motor and hence the rack and the pusher fingers a predetermined stroke from a retracted position to an advanced position to receive the bottles on the dead plate 12.

The second stepping motor 26 then causes rotation of the motor 20 and the pusher fingers 16 from their advanced position to carry the bottles to a deposit location along a bottle line on the conveyor.

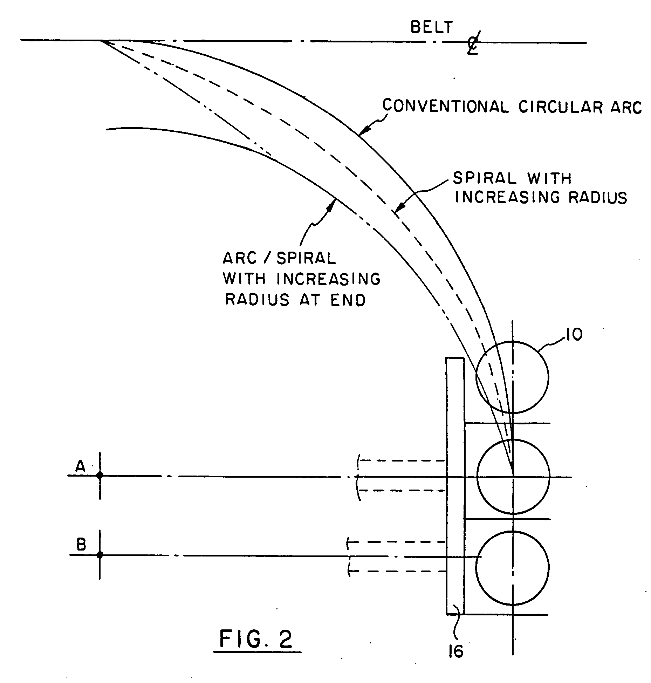

When the pusher fingers pivot to push the bottles onto the conveyor, the Axial Profile Generator will define a second rack advance axial displacement profile which may cause the pusher fingers 16 to advance from their advanced position to a further advanced position. This profile may conform to the conventional circular arc of the pusher fingers which is illustrated in Figure 2 or it may be a new spiral path which can either be a pure spiral of initial part circular arc followed by a spiral.

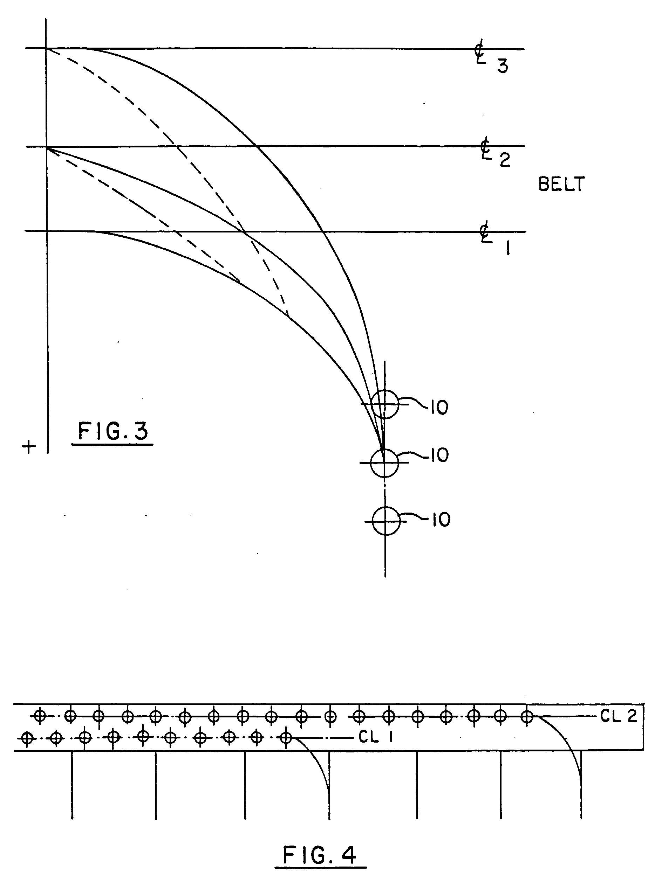

It is now possible to deposit bottles on the conveyor belt along more than one line. As shown in Figure 3, the pusher fingers 16 of one pusher mechanism can follow a conventional circular arc to deposit bottles along a first center line (CL1) while the pusher fingers 16 of other pusher mechanisms can follow an arc being a spiral or having at least a spiral portion to deposit bottles along second (CL2) and third (CL3) center lines. Figure 4 illustrates the placement of bottles along two lines to allow, for the same bottle spacing, halving of the conveyor speed and thus of the pusher finger speed. Three or more lines of bottles could be defined in this manner.

## Claims

1. A pusher system including a plurality of pusher mechanisms, each displacing at least one bottle from an at rest position on a corresponding plurality of dead plates (12) on an I.S. machine through a predetermined angle onto a moving conveyor belt (14), each of said pusher mechanisms comprising
pusher fingers (16), providing at least one ware receiving receptacle,
means (18,20,22), for axially advancing said pusher fingers from a retracted position to an advanced position to receive at least one bottle on an associated dead plate,
means (26) for displacing the pusher fingers (16) of the pusher mechanism from said advanced position to a deposit location along a bottle line on the conveyor,
characterized in that
the means (18,20,22) for axially advancing the pusher fingers (16) of at least one of the pusher mechanisms may be caused to advance the pusher fingers from its advanced position to a further advanced position as the displacing means displaces the pusher fingers to the deposit location
so that one of the pusher mechanisms may be caused to move its pusher fingers from the advanced position to a first deposit location along a first bottle line on the conveyor,
while another of the pusher mechanisms may be caused to move its pusher fingers from the advanced position to a second deposit location along a second bottle line on the conveyor parallel to and spaced from the first bottle line
so that bottles will be deposited on the conveyor along such first and second bottle lines.

2. A pusher system according to claim 1, characterized in that in each pusher mechanism the axially advancing means (18,20,22) is pivotally supported, and the means for displacing the pusher fingers from said advanced position to the deposit location comprises
means for pivotally displacing the axially advancing means from a start angle to a finish angle, and
the means (18,20,22) for axially advancing the pusher fingers (16) from the advanced position to the further advanced position operates during at least a portion of the pivotal displacement from the start angle to the finish angle.

3. A pusher system according to claim 2, characterized in that the pusher fingers of a pusher mechanism are axially advanced from said advanced position to said further advanced position during the entire portion of said pivotal displacement.

## Patentansprüche

1. Schiebersystem mit einer Vielzahl von Schiebermechanismen, von denen jeder mindestens eine Flasche von einer Ruheposition auf einer entsprechenden Vielzahl von Standplatten (12) auf einer I.S.-Maschine um einen vorbestimmten Winkel auf ein laufendes Förderband (14) verschiebt, wobei jeder Schiebermechanismus aufweist:
Schieberfinger (16), die mindestens ein artikelempfangendes Aufnahmefach bereitstellen,
Einrichtungen (18, 20, 22) zum axialen Vorwärtsbewegen der Schieberfinger aus einer zurückgezogenen Stellung in eine vorgerückte Stellung, um mindestens eine Flasche auf einer zugehörigen Standplatte zu empfangen,
Einrichtungen (26) zum Verschieben der Schieberfinger (16) des Schiebermechanismus von der vorgerückten Stellung auf einen Abstellplatz in einer Flaschenreihe auf dem Förderer,
dadurch **gekennzeichnet,**
daß die Einrichtungen (18, 20, 22) zum axialen Vorwärtsbewegen der Schieberfinger (16) mindestens eines der Schiebermechanismen veranlaßt werden, die Schieberfinger von ihrer vorgerückten Stellung in eine weiter vorgerückte Stellung vorwartszubewegen, wenn die Schiebereinrichtungen die Schieberfinger in die Abstellposition verschieben,
so daß einer der Schiebermechanismen veranlaßt werden kann, seine Schieberfinger von der vorgerückten Stellung zu einem ersten Abstellplatz in einer ersten Flaschenreihe auf dem Förderer zu bewegen,
während ein anderer Schiebermechanismus veranlaßt werden kann, seine Schieberfinger von der vorgerückten Stellung an einen zweiten Abstellplatz in einer zweiten Flaschenreihe auf dem Förderer zu bewegen, die parallel und mit Abstand von der ersten Flaschenreihe verläuft,
so daß Flaschen auf dem Förderer in solchen ersten und zweiten Flaschenreihen abgestellt werden.

2. Schiebersystem nach Anspruch 1, dadurch gekennzeichnet, daß in jedem Schiebermechanismus die sich axial vorwärts bewegende Einrichtung (18, 20, 22) schwenkbar gehaltert ist, und daß die Einrichtungen zum Verschieben der Schieberfinger von der vorgerückten Stellung zum Abstellplatz aufweisen:
Einrichtungen zum schwenkenden Verschieben der sich axial vorwärtsbewegenden Einrichtungen ab einem Anfangswinkel zu einem Endwinkel; und
die Einrichtung (18, 20, 22) zum axialen Vorwärtsbewegen der Schieberfinger (16) von der vorgerückten Stellung zu der weiter vorgerückten Stellung während mindestens eines Abschnittes der Schwenkverschiebung vom Anfangswinkel zum Endwinkel agiert.

3. Schiebersystem nach Anspruch 2, dadurch gekennzeichnet, daß die Schieberfinger eines Schiebermechanismus während des gesamten Abschnittes der Schwenkverschiebung axial von der vorgerückten Stellung zu der weiter vorgerückten Stellung vorwärtsbewegt werden.

## Revendications

1. Système de poussoirs comprenant une pluralité de mécanismes poussoirs, dont chacun déplace au moins une bouteille d'un angle prédéterminé, d'une position de repos située sur une pluralité correspondante de plaques d'attente (12) d'une machine à sections individuelles, à une courroie transporteuse mobile (14), chacun de ces mécanismes poussoirs comprenant :
des doigts (16) de poussoir, qui forment au moins un réceptacle de réception d'objets,
des moyens (18, 20, 22) servant à faire avancer axialement ces doigts de poussoir d'une position rétractée à une position avancée pour recevoir au moins une bouteille située sur une plaque d'attente correspondante,
des moyens (26) servant à déplacer les doigts (16) de poussoir du mécanisme de poussoir de cette position avancée à un emplacement de dépôt situé le long d'une ligne de bouteilles située sur le transporteur, caractérisé en ce que
les moyens (18, 20, 22) servant à faire avancer axialement les doigts (16) de poussoir d'au moins un des mécanismes poussoirs peuvent être commmandés pour faire avancer les doigts de poussoir d'une position à une position plus avancée lorsque les moyens de déplacement conduisent les doigts de poussoir à l'emplacement de dépôt,
de sorte qu'un des mécanismes poussoirs peut être commandé pour faire passer ses doigts de poussoir de la position avancée à un premier emplacement de dépôt le long d'une première ligne de bouteilles située sur le transporteur,
tandis qu'un autre des mécanismes poussoirs peut être commandé pour faire passer ses doigts de poussoir de la position avanée à un deuxième emplacement de dépôt le long d'une deuxième ligne de bouteilles située sur le transporteurs parallèle à la première ligne de bouteilles et espacée de celle-ci,
de sorte que les bouteilles seront déposées sur le transporteur le long des première et deuxième lignes de bouteilles.

2. Système de poussoirs selon la revendication 1, caractérisé en ce que, dans chaque mécanisme poussoir, les moyens (18, 20, 22) d'avance axiale sont montés pivotants et les moyens servant à déplacer les doigts de poussoirs de ladite position avancée à l'emplacement de dépôt comprennent :
des moyens servant à déplacer les moyens d'avance axiale par pivotement, d'un angle de départ jusqu'à un angle final ; et
les moyens (18, 20, 22) servant à avancer axialement les doigts (16) de poussoir de la position avancée à la position plus avancée opèrent pendant au moins une partie du déplacement par pivotement allant de l'angle de départ à l'angle final.

3. Système de poussoirs selon la revendication 2, caractérisé en ce que les doigts de poussoir d'un mécanisme poussoir sont avancés axialement de cette position avancée à cette position plus avancée pendant toute la partie de ce pivotement.
